# EUROPÄISCHE PATENTSCHRIFT

(11) **EP 1 773 531 B1**
(45) Veröffentlichungstag und Bekanntmachung des Hinweises auf die Patenterteilung: **03.10.2012**
(21) Anmeldenummer: 05760689.9
(22) Anmeldetag: 04.07.2005
(51) Int. Cl.: B23K 1/00, B23K 1/008, F28F 9/00, F28F 9/02, F28F 21/08

(54) **VERFAHREN ZUM LÖTEN EINES WÄRMEÜBERTRAGERS UND WÄRMEÜBERTRAGER, HERGESTELLT NACH DEM VERFAHREN**
METHOD FOR SOLDERING A HEAT EXCHANGER, AND A HEAT EXCHANGER PRODUCED ACCORDING TO THIS METHOD
PROCEDE DE BRASAGE D'UN ECHANGEUR DE CHALEUR ET ECHANGEUR DE CHALEUR PRODUIT SELON LEDIT PROCEDE

(30) Priorität: 30.07.2004 DE 102004037392
(43) Veröffentlichungstag der Anmeldung: 18.04.2007
(73) Patentinhaber: Behr GmbH & Co. KG, 70469 Stuttgart (DE)
(72) Erfinder: GEIGER, Wolfgang, 71642 Ludwigsburg (DE); STAFFA, Karl-Heinz, 70567 Stuttgart (DE)
(74) Vertreter: Grauel, Andreas
(86) Internationale Anmeldenummer: PCT/EP2005/007181
(87) Internationale Veröffentlichungsnummer: WO 2006/012961

(56) Entgegenhaltungen:
- EP-A- 0 866 300
- US-A- 5 732 769
- US-A1- 2001 007 282

## Beschreibung

Die Erfindung betrifft ein Verfahren zum Löten eines Ganzaluminium-Wärmeübertragers, insbesondere eines Kühlmittelkühlers für Kraftfahrzeuge nach dem Oberbegriff des Patentanspruches 1 sowie einen Wärmeübertrager, hergestellt nach dem Verfahren, nach dem Oberbegriff des Patentanspruches 4.

Getriebeölkühler für Kraftfahrzeuge sind vielfach in einem Kühlmittelkasten eines Kühlmittelkühlers untergebracht und werden somit vom Kühlmittel des Kühlkreislaufes für die Brennkraftmaschine des Kraftfahrzeuges gekühlt. Getriebeölkühler sind als hartgelötete Scheiben- oder Flachrohrkühler bekannt, deren Anschlussstutzen durch entsprechende Öffnungen in der Wand des Kühlmittelkastens gesteckt und abgedichtet werden. Soweit die Kühlmittelkästen aus Kunststoff hergestellt sind, erfolgt die Abdichtung über O-Ringe, wie es aus der EP-A 866 300 oder der DE-A 101 06 510 der Anmelderin bekannt ist. Eine derartige Abdichtung und Verschraubung erfordert zusätzliche Montagezeit und beinhaltet ein Leckagerisiko.

Aus Gründen des Recycling werden heute sortenreine Wärmeübertrager, z. B. hartgelötete Ganzaluminium-Wärmeübertrager hergestellt, welche nach dem so genannten Nocolok-Verfahren, bekannt durch die DE-A 26 14 872 oder die DE-A 195 48 244 der Anmelderin, gelötet werden. Mit diesem Lötverfahren können relativ große Lötspalte überbrückt werden, und es bleiben keine korrosiven Flussmittel zurück. Allerdings bestehen Bedenken, das Nocolok-Lötverfahren auf Wärmeübertrager anzuwenden, für die eine hohe Innenreinheit gefordert wird, wie z. B. bei Getriebeölkühlern für Kraftfahrzeuge. Daher werden Getriebeölkühler vorzugsweise mit einem flussmittelfreien Lötverfahren im Vakuum gelötet, danach in den Aluminium-Kühlmittelkasten eingesetzt und durch O-Ringe abgedichtet.

Durch die EP-A 846 931 wurde ein Ganzaluminium-Wärmeübertrager in Form eines Kühlmittelkühlers mit einem Kühlmittelkasten bekannt, in welchem ein Ganzaluminiumölkühler eingesetzt und eingelötet ist. Der Ölkühler ist als Doppelrohrölkühler ausgebildet, wird über zwei ringförmig ausgebildete Flansche gehalten und ist an der Wand des Kühlmittelkastens befestigt bzw. fixiert. Beide Wärmeübertrager werden in einem Arbeitsgang gelötet, d. h. nach einem und demselben Lötverfahren. Nachteilig bei dieser Fertigungsmethode ist, dass für die Verspannung des Ölkühlers selbst und gegenüber dem Kühlmittelkasten des Kühlers relativ viele Teile, verbunden mit einem entsprechenden Montageaufwand, erforderlich sind.

Es ist Aufgabe der vorliegenden Erfindung, ein Verfahren zum Löten eines Ganzaluminium-Wärmeübertragers mit Zusatzwärmeübertrager anzugeben, welches eine wirtschaftliche Herstellung sowie eine hohe Innenreinheit des Zusatzwärmeübertragers erlaubt. Ferner ist es Aufgabe der Erfindung, einen Ganzaluminium-Wärmeübertrager mit Zusatzwärmeübertrager zu schaffen, der die notwendigen Voraussetzungen aufweist, um nach dem Nocolok-Verfahren gelötet zu werden.

Diese Aufgabe wird zunächst durch die Merkmale des Patentanspruches 1 gelöst. Erfindungsgemäß sind folgende drei aufeinander folgenden Verfahrensschritte vorgesehen: zuerst, d. h. in einem ersten Lötprozess wird der Zusatzwärmeübertrager flussmittelfrei im Vakuum gelötet; danach wird der gelötete Zusatzwärmeübertrager in den Sammelkasten des Ganzaluminium-Wärmeübertragers eingesetzt und dort für eine nachfolgende, zweite Lötung fixiert; schließlich werden beide Wärmeübertrager, d. h. der bereits gelötete Zusatzwärmeübertrager und der noch nicht gelötete Wärmeübertrager zusammen nach dem so genannten Nocolok-Verfahren gelötet, wobei der Zusatzwärmeübertrager einem zweiten Lötprozess unterzogen wird.

Mit dem erfindungsgemäßen Verfahren wird einerseits der Vorteil erreicht, dass der Zusatzwärmeübertrager, insbesondere ein Getriebeölkühler für ein Kraftfahrzeug mit einer hohen Innenreinheit hergestellt werden kann und keine Flussmittelrückstände aufweist. Der Getriebeölkühler bzw. der Zusatzwärmeübertrager kann somit in einer einfachen Lötvorrichtung, d. h. mit einfachen Spannmitteln wirtschaftlich hergestellt werden. Anschließend kann der gelötete Zusatzwärmeübertrager mit einfachen Mitteln im Sammelkasten des Wärmeübertragers fixiert werden, d. h. die Einzelteile des Zusatzwärmeübertragers müssen nicht mehr gespannt werden; damit entfällt auch eine Vielzahl von Teilen, welche für die Verspannung notwendig wären, sowie entsprechende Rüstzeit. Durch das Nocolok-Lötverfahren wird eine dichte Lötverbindung zwischen Zusatzwärmeübertrager und Sammelkasten hergestellt, so dass etwaige Dichtmittel entfallen. Das Nocolok-Löten erfolgt bei einer Temperatur, welche niedriger als die Aufschmelztemperatur der Lötverbindungen des bereits gelöteten Zusatzwärmeübertragers ist - dies ergibt sich daraus, dass das Lot durch das Vakuumlöten aufgeschmolzen wurde und teilweise in den Grundwerkstoff diffundiert ist und dass sich parallel Grundwerkstoff mit Lot vermischt hat, so dass sich im Bereich der Lotnaht ein Gefüge mit einer Aufschmelztemperatur ergeben hat, welche oberhalb der Löttemperatur, d. h. der Schmelztemperatur der Lotlegierung liegt. Dieser Effekt ist darauf zurückzuführen, dass das eutektische Lot einen höheren Si-Gehalt hat als das sich bei der Lötung ausbildende nicht eutektische Gefüge im Bereich der Lötverbindung. Silizium erniedrigt den Schmelzpunkt. Durch die Diffusion von Silizium in den Grundwerkstoff sinkt der Si-Gehalt, und damit erhöht sich der Schmelzpunkt. Der bereits vakuumgelötete Zusatzwärmeübertrager wird damit beim nachfolgenden Nocolok-Löten nicht wieder angeschmolzen oder in seiner Lötverbindung beeinträchtigt.

In vorteilhafter Ausgestaltung der Erfindung kann die Wiederaufschmelztemperatur der Lötverbindung des Zusatzwärmeübertragers durch bestimmte Lötparameter während des ersten Lötprozesses beeinflusst werden, und zwar durch die Lötzeit, die Löttemperatur, die Lötspalte und die Lotmenge zwischen den zu verlötenden Teilen. Damit wird der Vorteil erreicht, dass der Abstand der Wiederaufschmelztemperatur des Zusatzwärmeübertragers hinreichend groß wird gegenüber der Löttemperatur im zweiten Lötprozess, so dass ein Anschmelzen oder ein etwaiges Undichtwerden des Zusatzwärmeübertragers während des zweiten Lötprozesses mit Sicherheit vermieden wird.

Die Aufgabe der Erfindung wird auch durch die Merkmale des Patentanspruches 4 gelöst. Erfindungsgemäß ist ein Zusatzwärmeübertrager mit zwei Anschlussstutzen vorgesehen, welche durch entsprechende Öffnungen in der Wand des Sammelkastens hindurchgesteckt und von außen durch eine lötbare Mutter gesichert werden. Damit wird der Vorteil erreicht, dass der bereits im Vakuum gelötete Zusatzwärmeübertrager für den anschließenden Nocolok-Lötprozess hinreichend am Sammelkasten fixiert ist, so dass auch eine Dichtlötung der beiden Anschlussstutzen möglich ist. Zusatzwärmeübertrager und Wärmeübertrager können somit komplett in einem Arbeitsgang gelötet werden. Anstelle aufwendiger Spannmittel, wie sie durch den Stand der Technik bekannt sind, werden erfindungsgemäß nur zwei so genannte Lötmuttem benötigt, d. h. lotplattierte Muttern, die einerseits die Fixierung und andererseits die Dichtlötung der Stutzen bewirken.

Nach einer vorteilhaften Ausgestaltung der Erfindung bestehen die miteinander verlötbaren Teile des Zusatzwärmeübertragers, also beispielsweise Flachrohre und Turbulenzeinlagen aus einer Aluminiumlegierung mit der Normbezeichnung EN-AW 3003 für den Grundwerkstoff und einer Lotplattierung aus einer Aluminium-Silizium-Legierung mit der Normbezeichnung EN-AW 4004.

In weiterer vorteilhafter Ausgestaltung der Erfindung ist der Sammelkasten des Wärmeübertragers aus einer Aluminiumlegierung mit der Normbezeichnung EN-AW 3003 und einer Lotplattierung aus einer Al-Si-Legierung der Normbezeichnungen EN-AW 4045, EN-AW 4047 bzw. EN-AW 4343 hergestellt. Durch diese Werkstoffkombination beim Zusatzwärmeübertrager einerseits und beim Wärmeübertrager andererseits ergibt sich der Vorteil, dass die Löttemperatur des Nocolok-Lötprozesses hinreichend weit unterhalb der Schmelztemperatur des gelöteten Zusatzwärmeübertragers liegt. Der Zusatzwärmeübertrager erfährt somit durch den abschließenden Nocolok-Lötprozess keinerlei Beeinträchtigung hinsichtlich seiner Festigkeit und Gefügeausbildung.

Ein Ausführungsbeispiel der Erfindung ist in der Zeichnung dargestellt und wird im Folgenden näher beschrieben. Es zeigen
- Fig. 1: einen Querschnitt durch einen Kühlmittelkasten mit eingebautem Getriebeölkühler und
- Fig. 2: einen Längsschnitt durch den Kühlmittelkasten mit einem Ausschnitt des Getriebeölkühlers.

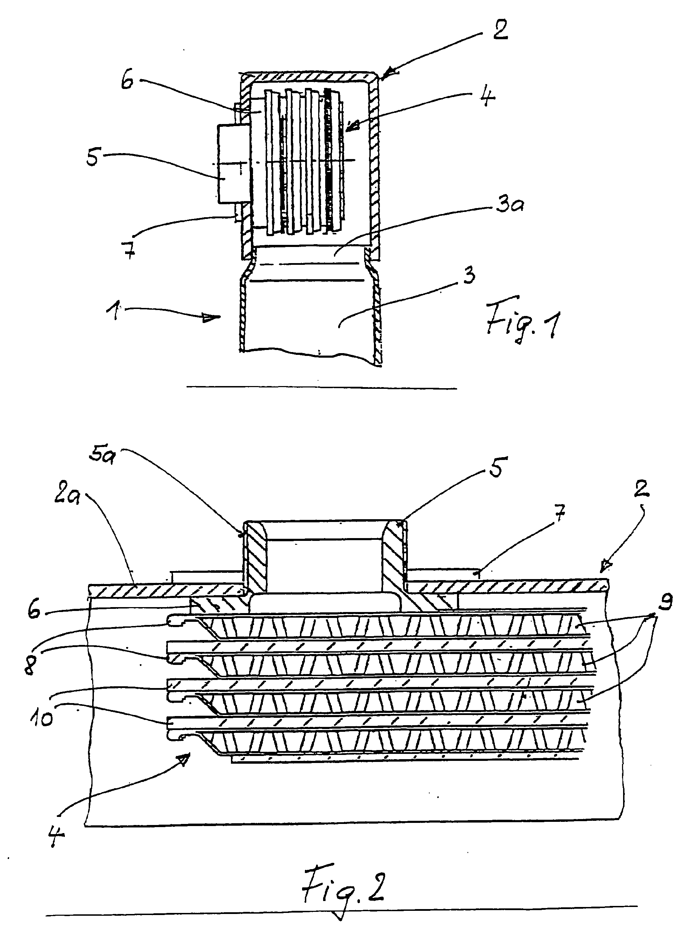

**Fig. 1** zeigt einen Ganzaluminium-Wärmeübertrager, der als Kühlmittelkühler 1 für eine nicht dargestellte Brennkraftmaschine eines Kraftfahrzeuges ausgebildet ist. Der Kühlmittelkühler 1 ist nur teilweise, d. h. mit einem Kühlmittelkasten 2 dargestellt, welcher aus einem U-förmigen Blechprofil besteht, welches an seiner offenen Seite Rohrenden 3a von Flachrohren 3 aufnimmt. Der Kühlmittelkasten 2 sowie die Flachrohre 3 werden vom Kühlmittel eines nicht dargestellten Kühlmittelkreislaufes für die Brennkraftmaschine durchströmt. Ein derartiger Ganzaluminium-Wärmeübertrager 1 ist bekannt, z. B. aus der DE-A 195 43 986 der Anmelderin. Innerhalb des Querschnittes des Kühlmittelkastens 2 ist ein als Getriebeölkühler 4 ausgebildeter Zusatzwärmeübertrager angeordnet, welcher als Flachrohrölkühler, ebenfalls in Ganzaluminiumbauweise, ausgebildet ist. Der Getriebeölkühler 4 weist zwei Anschlussstutzen auf, von welchen ein Anschlussstutzen 5 dargestellt ist, welcher eine Öffnung im Sammelkasten 2 durchdringt und nach außen vorsteht. Der Getriebeölkühler 4 weist ferner einen Flansch 6 auf, welcher an der Innenseite des Kühlmittelkastens 2 anliegt. Über den nach außen vorstehenden Anschlussstutzen 5 ist eine Lötmutter 7 geschraubt, welche aus einem lotplattierten Aluminiumblech hergestellt ist. Der Getriebeölkühler 4 wird primärseitig, d. h. durch die Flachrohre von Getriebeöl durchströmt und sekundärseitig durch das Kühlmittel des Kühlmittelkühlers 1 gekühlt.

**Fig. 2** zeigt den Kühlmittelkasten 2 und den Getriebeölkühler 4 im Längsschnitt teilweise, d. h. im Bereich des Anschlussstutzens 5. Der Getriebeölkühler 4 ist aus einer Anzahl von Flachrohren 8 aufgebaut, innerhalb welcher Turbulenzeinlagen 9 angeordnet sind. Zwischen den Flachrohren 8 sind Abstandshalter, Noppen oder Turbulenzbleche 10 angeordnet, welche vom Kühlmittel durchströmt werden. Die Turbulenzeinlagen 9 dagegen werden vom Getriebeöl durchströmt. Das Innere der Flachrohre 8, welche auf nicht dargestellte, jedoch bekannte Weise untereinander verbunden sind, ist über den Anschlussstutzen 5 mit Flansch 6 nach außen mit einem nicht dargestellten Getriebeölkreislauf verbunden. Der Anschlussstutzen 5 weist ein Außengewinde 5a auf, über welches die Lötmutter 7, die ein entsprechendes Innengewinde trägt, geschraubt ist. Der Kühlmittelkasten 2 weist, zumindest im Bereich des Anschlussstutzens 5, eine ebene Wandung 2a auf, an welche sich auf der Innenseite der plan ausgebildete Flansch 6 anlegt, der sich nach außen in dem Anschlussstutzen 5 fortsetzt, also einstückig mit diesem ausgebildet ist. Über die Lötmutter 7 und das Außengewinde 5a wird der Flansch 6 und damit der Getriebeölkühler 4 gegen die Wand 2a verspannt.

Das erfindungsgemäße Verfahren läuft wie folgt ab: Zunächst wird der Getriebeölkühler 4, bestehend aus den Einzelteilen, wie Anschlussstutzen 5 mit Flansch 6, Flachrohren 8, Turbulenzeinlagen 9 sowie Turbulenzblechen 10 für eine Vakuumlötung vorbereitet, verspannt, fixiert und in einem nicht dargestellten Vakuumofen gelötet. Die Einzelteile, z. B. die als geschweißte Flachrohre ausgebildeten Flachrohre 8 weisen eine beidseitige Lotplattierung auf, welche einerseits eine Verlötung mit den Turbulenzeinlagen 9 und andererseits eine Verlötung mit den außen angeordneten Turbulenzblechen 10 sowie mit dem Flansch 6 erlaubt. Nachdem Vakuum-Löten ist der Getriebeölkühler 4 fertig, d. h. voll funktionsfähig. Im nächsten Verfahrensschritt wird der Kühlmittelkühler 1 mit sämtlichen Einzelteilen wie Rohren 3 und Kühlmittelkästen 2 sowie nicht dargestellten Rippen für die Lötung vorbereitet. Dabei wird auch der bereits im Vakuum gelötete Getriebeölkühler 4 in den Kühlmittelkasten 2 eingesetzt, mit seinem Stutzen 5 durch einer entsprechende Öffnung in der Wand 2a gesteckt und von außen durch die Lötmutter 7 gesichert. In gleicher Weise wird der zweite nicht dargestellte Anschlussstutzen des Getriebeölkühlers 4 an der Wand 2a des Kühlmittelkastens 2 befestigt. Der Getriebeölkühler 4 ist somit - ohne weitere Spannmittel - nur über die Mutter 7 - im Kühlmittelkasten 2 fixiert. Danach erfolgt die abschließende Lötung, indem der Kühlmittelkühler 1 mit dem Getriebeölkühler 4 in einen nicht dargestellten Lötofen verbracht wird und dort im so genannten Nocolok-Lötverfahren gelötet wird, welches beispielsweise aus der eingangs erwähnten DE-A 26 14 872 bekannt ist. Die Lötmutter 7, die auf der der Wand 2a zugewandten Seite lotplattiert ist, verlötet mit der Wand 2a, ebenso der Flansch 6 mit der Innenseite der Wand 2a.

Die Nocolok-Lötung und die Vakuumlötung erfolgt bei etwa gleichen oder ähnlichen Löttemperaturen, wobei die Lötverbindungen der Nocolok-Lötung nicht mehr an- oder aufgeschmolzen werden.

Nach Abschluss der Nocolok-Lötung ist der Getriebeölkühler 4 über seine Anschlussstutzen fest und dicht mit dem Kühlmittelkasten 2 verbunden. Weitere Dichtmittel, wie z. B. O-Ringe sind nicht erforderlich. Der Anschluss an den nicht dargestellten Ölkreislauf erfolgt über nicht dargestellte Schraubverschlüsse.

## Patentansprüche

1. Verfahren zum Löten eines Ganzaluminium-Wärmeübertragers (1), insbesondere eines Kühlmittelkühlers für Kraftfahrzeuge, mit einem Sammelkasten (2), in welchem ein Zusatzwärmeübertrager (4), insbesondere ein Getriebeölkühler angeordnet ist, **dadurch gekennzeichnet, dass**
- der Zusatzwärmeübertrager (4) in einem ersten Lötprozess separat nach einem flussmittelfreien Lötverfahren, insbesondere in einem Vakuum gelötet wird und danach eine Wiederaufschmelztemperatur aufweist,
- anschließend in dem Sammelkasten (2) des Wärmeübertragers (1) positioniert sowie fixiert und
- in einem zweiten Lötprozess zusammen mit dem Ganzaluminium-Wärmeübertrager (1) einschließlich Sammelkasten (2) nach dem so genannten Nocolok-Verfahren gelötet wird, wobei die Löttemperatur unterhalb der Wiederaufschmelztemperatur des gelöteten Zusatzwärmeübertragers liegt.

2. Verfahren nach Anspruch 1, **dadurch gekennzeichnet, dass** die Wiederaufschmelztemperatur des Zusatzwärmeübertragers, insbesondere seiner Lötverbindungen während des ersten Lötprozesses durch Lötparameter wie Lötzeit, Löttemperatur, Lötspaltbreite und Lotmenge derart eingestellt wird, dass der Abstand zur Löttemperatur des zweiten Lötprozesses hinreichend groß wird.

3. Verfahren nach Anspruch 1 oder 2, **dadurch gekennzeichnet, dass** für den ersten und für den zweiten Lötprozess Lote mit annähernd gleichem Schmelzbereich verwendet werden.

4. Wärmeübertrager, hergestellt nach dem Verfahren gemäß Anspruch 1, 2 oder 3, **dadurch gekennzeichnet, dass** der Zusatzwärmeübertrager (4) zwei nach außen vorstehende Anschlussstutzen (5) mit Außengewinde (5a) und der Sammelkasten (2) die Anschlussstutzen (5) aufnehmende Öffnungen aufweist und dass der Zusatzwärmeübertrager (4) mittels verlöteter, über die Außengewinde (5a) gegen den Sammelkasten (2, 2a) geschraubter, lotplattierter Muttern (7) gehalten und abgedichtet ist.

5. Wärmeübertrager nach Anspruch 4, **dadurch gekennzeichnet, dass** der Zusatzwärmeübertrager (4) verlötbare Einzelteile, insbesondere Flachrohre (8) und Turbulenzeinlagen (9) aufweist, welche aus einer Aluminiumlegierung mit der Normbezeichnung EN-AW 3xxx (3003) bzw. EN-AW 6xxx (6060) für den Grundwerkstoff mit einer Lotplattierung aus einer Al-Si-Legierung mit der Normbezeichnung EN-AW 4xxx (4004) herstellbar sind.

6. Wärmeübertrager nach Anspruch 4, **dadurch gekennzeichnet, dass** der Sammelkasten (2) aus einer Aluminiumlegierung mit der Normbezeichnung EN-AW 3xxx (EN-AW 3003) und einer Lotplattierung aus einer Al-SI-Legierung mit der Normbezeichnung EN-AW 4xxx (EN-AW 4045) herstellbar ist.

## Claims

1. A method for soldering an all-aluminum heat exchanger (1), and more particularly a coolant radiator for motor vehicles, comprising a header box (2) in which an additional heat exchanger (4), and more particularly a transmission oil cooler, is disposed, **characterized in that**
- in a first soldering process, the additional heat exchanger (4) is soldered separately according to a flux-free soldering method, and more particularly in a vacuum, and then has a remelting temperature,
- is subsequently positioned and fixed in the header box (2) of the heat exchanger (1), and
- in a second soldering process is soldered together with the all-aluminum heat exchanger (1), including the header box (2), according to what is known as the Nocolok method, wherein the soldering temperature is below the remelting temperature of the soldered additional heat exchanger.

2. The method, according to claim 1, **characterized in that** the remelting temperature of the additional heat exchanger, and more particularly of the soldered joints thereof, is set duping the first soldering process using soldering parameter such as the soldering time, soldering temperature, soldering gap width and solder quantity such that the difference to the soldering temperature of second soldering process is sufficiently large.

3. The method according to claim 1 or 2, **characterized in that** solders having approximately the same melting range are used for the first and second soldering processes.

4. A heat exchanger, produced according to the method as claimed in claim 1, 2, or 3, **characterized in that** the additional heat exchanger (4) comprises two outwardly protruding connecting pieces (5) having external threads (5a) and the header box (2) comprises openings which accommodate the connecting pieces (5), and the additional heat exchanger (4) is held and sealed by means of soldered, solder-plated nuts (7) which are screwed against the header box (2, 2a) via the eternal threads (5a).

5. The heat exchanger according to claim 4, **characterized in that** the additional heat exchanger (4) comprises solderable individual parts, and more particularly flat tubes (8) and turbulence inserts (9), which can be produced from an aluminium alloy having the standard designation EN-AW 3xxx (3003) or EN-AW 6xxx (6060) for the base material with a solder plating made of an Al-Si alloy having the standard designation EN-AW 4xxx (4004).

6. The heat exchanger according to claim 4, **characterized in that** the header box (2) can be produced from an aluminium alloy having the standard designation EN-AW 3xxc (EN-AW 3003) and a solder plating made of an Al-Si alloy having the standard designation EN-AW 4xxc (EN-AW 4045).

## Revendications

1. Procédé de brasage d'un échangeur de chaleur (1) tout en aluminium, en particulier d'un refroidisseur à liquide de refroidissement pour des véhicules automobiles, comprenant un bac collecteur (2) dans lequel est disposé un échangeur de chaleur supplémentaire (4), en particulier un refroidisseur d'huile de boîte de vitesses,
**caractérisé en ce que**
- l'échangeur de chaleur supplémentaire (4), au cours d'un premier processus de brasage, est brasé séparément selon un procédé de brasage sans fondant, en particulier sous vide, et présente ensuite une température de refusion,
- ensuite est positionné et fixé dans le bac collecteur (2) de l'échangeur de chaleur (1), et
- au cours d'un deuxième processus de brasage est brasé avec l'échangeur de chaleur (1) tout en aluminium, y compris avec le bac collecteur (2), selon le procécé dit de Nocolok, où la température de brasage est inférieure à la température de refusion de l'échangeur de chaleur supplémentaire brasé.

2. Procédé selon la revendication 1, **caractérisé en ce que** la température de refusion de l'échangeur de chaleur supplémentaire, en particulier de ses joints brasés au cours du premier processus de brasage, est régalée par des paramètres de brasage tels que le temps de brasage, la température de brasage, la largeur d'interstice de brasage, et la quantité de brasure, de manière telle que l'écart par rapport à la température de brasage du deuxième processus de brasage soit suffisamment important.

3. Procédé selon la revendication 1 ou 2, **caractérisé en ce que**, pour le premier et pour le deuxième processus de brasage, on utilisé des brasures avant presque le même régime de fusion.

4. Echangeur de chaleur fabriqué selon le procédé conformément aux revendications 1, 2 ou 3, **caractérisé en ce que** l'échangeur de chaleur supplémentaire (4) présente deux tubulures de raccordement (5) en saillie vers l'extérieur et comportant un filetage extérieur (5a), et le bac collecteur (2) présente des ouvertures recevant les tubulures de raccordement (5), et **en ce que** l'échangeur de chaleur supplémentaire (4) est maintenu et rendu étanche au moyen d'écrous (7) plaqués par brasage ou brasés et vissés sur les filetages extérieurs (5a) en s'appliquant contré le bac collecteur (2, 2a).

5. Echangeur de chaleur selon la revendication 4, **caractérisé en ce que** l'échangeur de chaleur supplémentaire (4) présente des pièces individuelles pouvant être brasées, en particulier des tubes plats (8) et des générateurs de turbulences (9), pièces individuelles qui peuvent être fabriquées, pour le matériau de base, à partir d'un alliage d'aluminium dont la résignation de norme est EN-AW 3xxx (3003) ou EN-AW 6xxx (6060), et à partir d'un placage par brasage se composant d'un alliage d'aluminium et de silicium (Al-Si) dont la désignation de norme est EN-AW 4xxx (4004).

6. Echangeur de chaleur selon la revendication 4, **caractérisé en ce que** le bac collecteur (2) peut être fabriqué à partir d'un alliage en aluminium dont la désignation de norme est EN-AW 3xxx (EN-AW 3003), et à partir d'un placage par brasage se composant d'un alliage d'aluminium et de silicium (Al-Si) dont la désignation de norme est EN-AW 4xxx (EN-AW 4045).
